# EUROPÄISCHE PATENTANMELDUNG

(11) **EP 2 380 853 A2**
(43) Veröffentlichungstag der Anmeldung: **26.10.2011**
(21) Anmeldenummer: 11002784.4
(22) Anmeldetag: 04.04.2011
(51) Int. Cl.: C02F 1/66, B01D 53/78, C02F 103/18

(54) **Neutralisationsvorrichtung**

(30) Priorität: 20.04.2010 DE 102010017824
(71) Anmelder: Bomat Heiztechnik GmbH, 88662 Überlingen (DE)
(72) Erfinder: Bommer, Rolf, 88662 Überlingen (DE)
(74) Vertreter: Daub, Thomas

(57) **Zusammenfassung**

Die Erfindung geht aus von einer Neutralisationsvorrichtung, insbesondere zur Neutralisation von Kondensat (10a; 10b) aus einer Verbrennung von flüssigen, gasförmigen und/oder festen Brennstoffen, mit einem Aufnahmeraum (12a; 12b) zur Aufnahme von Neutralisationsmaterial (14a; 14b).

Es wird vorgeschlagen, dass die Neutralisationsvorrichtung wenigstens eine Spüleinrichtung (16a; 16b) aufweist, welche dazu vorgesehen ist, einen Spülvorgang des in dem Aufnahmeraum (12a; 12b) befindlichen Neutralisationsmaterials (14a; 14b) mit wenigstens einer Spülflüssigkeit (17a; 17b) durchzuführen.

## Beschreibung

### Stand der Technik

Die Erfindung geht aus von einer Neutralisationsvorrichtung nach dem Oberbegriff des Anspruchs 1.

Es ist bereits eine Neutralisationsvorrichtung zur Neutralisation von Kondensat aus einer Verbrennung von flüssigen, gasförmigen und/oder festen Brennstoffen mit einem Aufnahmeraum zur Aufnahme von Neutralisationsmaterial bekannt.

### Vorteile der Erfindung

Die Erfindung geht aus von einer Neutralisationsvorrichtung, insbesondere zur Neutralisation von Kondensat, insbesondere aus Brennwertanlagen, aus einer Verbrennung von flüssigen, gasförmigen und/oder festen Brennstoffen mit einem Aufnahmeraum zur Aufnahme von Neutralisationsmaterial.

Es wird vorgeschlagen, dass die Neutralisationsvorrichtung wenigstens eine Spüleinrichtung aufweist, welche dazu vorgesehen ist, einen Spülvorgang des in dem Aufnahmeraum befindlichen Neutralisationsmaterials mit wenigstens einer Spülflüssigkeit durchzuführen. Unter "vorgesehen" soll in diesem Zusammenhang insbesondere speziell ausgestattet, ausgelegt und/oder speziell programmiert verstanden werden. Unter einer "Neutralisation" soll dabei insbesondere eine PH-Wert-Verschiebung des Kondensats in Richtung "neutral" und/oder eine allgemeine Reinigung verstanden werden. Unter einem "Spülvorgang" soll insbesondere ein Vorgang verstanden werden, bei dem eine gegenüber einer gewöhnlichen Durchströmung während eines Neutralisationsvorgangs zusätzliche und/oder andere Durchströmung erzeugt wird. Durch eine entsprechende Ausgestaltung können Ablagerungen am Neutralisationsmaterial vorteilhaft abgeschwemmt, es kann über eine lange Zeit ein besonders vorteilhafter Wirkungsgrad erreicht und es kann insgesamt eine lange Lebensdauer eines vorliegenden Neutralisationsmaterials erreicht werden. Die Ablagerungen werden insbesondere von unverbrannten Kohlenwasserstoffen und Schwefel, CO₂, Gips (CaSO₄ NOX, Staub, Mineralien und Metallionen, welche in Brennstoffen enthalten sind, gebildet. Dazu kommen noch durch einen Metallabtrag in einem möglicherweise vorgeschalteten Wärmetauscher weitere Rückstände, wie Aluminium, Eisen, Blei, Chrom, Kupfer, Zink, Zinn und andere Elemente. Zudem kann ein Austrocknen des Neutralisationsmaterials, insbesondere bei einem Reinigungsvorgangs, sicher vermieden werden. Besonders vorteilhaft findet eine Entsorgung der Ablagerungen über einen bereits vorhandenen Ablauf statt, wie vorzugsweise mittels einer Pumpe. Das Neutralisationsmaterial wird vorzugsweise von Calciumhydroxid, Magnesiumhydroxid, Marmor und/oder Kalk gebildet. Grundsätzlich sind jedoch auch andere Neutralisationsmaterialien denkbar. Der PH-Wert wird dabei vorzugsweise auf kleiner 6,5 eingestellt. Die Spüleinrichtung kann zur Erzeugung eines Drucks vorzugsweise mit einer Pumpe ausgestattet sein und/oder kann dazu vorgesehen sein, einen Druck einer dritten Druckquelle zu nutzen.

In einer weiteren Ausgestaltung wird vorgeschlagen, dass die Spüleinrichtung dazu vorgesehen ist, wenigstens einen Teil des Neutralisationsmaterials von unten nach oben mit der Spülflüssigkeit zu durchspülen. Dabei soll unter "von unten nach oben durchspülen" insbesondere verstanden werden, dass zumindest ein Großteil, d.h. insbesondere mehr als 50%, der Flüssigkeit in einem ordnungsgemäßen Betrieb wenigstens einen Teil und besonders vorzugsweise wenigstens einen Großteil des Neutralisationsmaterials in einer Richtung durchströmt, die wenigstens eine Komponente in Richtung einer von einer Erdanziehungskraft entgegen gesetzte Richtung aufweist. Das Neutralisationsmaterial kann dadurch vorteilhaft gelockert und Ablagerungen können vorteilhaft mit der Spülflüssigkeit gelöst und entsorgt werden, und zwar vorzugsweise über einen vorhandenen Ablauf, über den auch im normalen Betrieb neutralisiertes Kondensat abgeführt wird. Die Neutralisationsvorrichtung weist hierfür insbesondere wenigstens einen innerhalb und/oder unterhalb einer von dem Neutralisationsmaterial gebildeten Schicht angeordneten Spülkopf auf. Der Spülkopf oder die Spülköpfe sind dabei vorzugsweise in der Weise angeordnet, dass mehr als 50% und vorzugsweise mehr als 70% des vorhandenen Neutralisationsmaterials bei einem Spülvorgang von der Spülflüssigkeit durchströmt werden.

Ferner kann der Reinigungsprozess verbessert werden, wenn die Spüleinrichtung dazu vorgesehen ist, einen Spülvorgang mit wenigstens einem Gas durchzuführen und insbesondere, wenn die Spüleinrichtung dazu vorgesehen ist, wenigstens einen Spülvorgang mit der Spülflüssigkeit und gleichzeitig mit dem Gas durchzuführen. Dabei soll insbesondere unter einem "Gas" ein zumindest zum Großteil in einer Flüssigkeit ungelöstes, gasförmiges Medium verstanden werden. Besonders bevorzugt ist das Gas zumindest zum Großteil von Luft gebildet. Unter "gleichzeitig" soll ferner insbesondere verstanden werden, dass zumindest zu einem Zeitpunkt, vorzugsweise zumindest über eine Zeitspanne von mehr als 1 sec, das Neutralisationsmaterial sowohl von der Spülflüssigkeit als auch von dem Gas durchströmt wird. Grundsätzlich kann das Neutralisationsmaterial jedoch auch getrennt, d.h. insbesondere zeitlich hintereinander, mit der Spülflüssigkeit und dem Gas gespült werden.

In einer weiteren Ausgestaltung der Erfindung wird vorgeschlagen, dass die Spüleinrichtung eine Ansaugeinheit aufweist, die dazu vorgesehen ist, mittels einer Flüssigkeit, vorzugsweise mit der Spülflüssigkeit, das Gas anzusaugen, und zwar vorzugsweise nach dem Prinzip einer Wasserstrahlpumpe, wie vorzugsweise mit einer Venturidüse. Durch eine entsprechende Ausgestaltung kann eine zusätzliche Antriebseinheit, insbesondere eine Pumpe, für das Gas eingespart und es kann ein konstruktiv einfacher und kostengünstiger Aufbau realisiert werden, bei dem insbesondere das Neutralisationsmaterial gleichzeitig mit der Spülflüssigkeit und dem Gas durchströmt werden kann.

Ferner wird vorgeschlagen, dass die Spüleinrichtung wenigstens eine Verschlusseinheit zur Erzielung eines gewünschten Spülstroms aufweist. Die Verschlusseinheit kann dabei von einem Bediener steuerbar ausgeführt sein, wie rein manuell und/oder durch Unterstützung eines Aktors, und/oder kann vorteilhaft als Rückschlageinheit ausgebildet sein, die in wenigstens eine Richtung einen Durchstrom zulässt und in wenigstens eine Richtung einen Durchstrom selbsttätig verhindert. Durch eine entsprechende Ausgestaltung kann bei einem Spülvorgang einfach eine gewünschte Durchströmung erzielt werden.

Weist die Neutralisationsvorrichtung wenigstens eine Schwingungserregungseinheit auf, die dazu vorgesehen ist, Ablagerungen, insbesondere am Neutralisationsmaterial, an einem Gehäuseteil und/oder an einem Einsatzkorb der Neutralisationsvorrichtung abzulösen, kann ein besonders vorteilhafter Reinigungsvorgang erreicht werden. Die Schwingungserregungseinheit kann dabei insbesondere Schallwellen und/oder besonders vorteilhaft mechanische Schwingungen erzeugen. Hierzu kann die Schwingungserregungseinheit vorzugsweise wenigstens eine Membran zur Erzeugung von Schallwellen und/oder wenigstens eine Unwuchteinheit zur Erzeugung von mechanischen Schwingungen aufweisen.

In einer weiteren Ausgestaltung der Erfindung wird vorgeschlagen, dass die Spüleinrichtung dazu vorgesehen ist, neutralisierte Kondensatflüssigkeit rückzuführen und zumindest teilweise für eine Spülflüssigkeit zu nutzen. Unter einer "neutralisierten Kondensatflüssigkeit" soll insbesondere eine Kondensatflüssigkeit verstanden werden, die das Neutralisationsmaterial bereits zumindest einfach bei einem gewöhnlichen Neutralisationsvorgang durchströmt hat. Durch eine entsprechende Ausgestaltung kann insgesamt ein besonders geringer Wasserverbrauch erreicht werden. Vorzugsweise ist die neutralisierte Kondensatflüssigkeit mit einer weiteren Flüssigkeit ergänzt, wie mit einer Reinigungsflüssigkeit und/oder besonders bevorzugt mit Frischwasser.

Ferner wird vorgeschlagen, dass die Spüleinrichtung wenigstens ein Sensormittel aufweist, wodurch vorteilhaft Warnsignale ausgegeben und/oder zumindest teilautomatisierte Prozesse ermöglicht werden können. Das Sensormittel ist vorzugsweise dazu vorgesehen, einen Wert der Kondensatflüssigkeit, wie insbesondere einen PH-Wert, eine Füllstandshöhe und/oder einen Brennstoffverbrauch, zu sensieren.

Weist die Spüleinrichtung eine Steuer- und/oder Regeleinheit auf, die abhängig von wenigstens einer Kenngröße einen Vorgang einleitet, besonders bevorzugt automatisiert einleitet, kann bei einem hohen Komfort eine hohe Sicherheit, insbesondere eine hohe Neutralisationssicherheit erreicht werden. Vorzugsweise kann ein Spülvorgang bei Unterschreiten eines bestimmten Niveaus automatisch aktiviert werden, um ein Austrocknen des Neutralisationsmaterials zu vermeiden. Es kann ein Spülvorgang abhängig von einem Brennstoffverbrauch und/oder abhängig von einem PH-Wert eingeleitet werden, es kann eine Kondensathebeanlage angesteuert werden und/oder es kann vor einem Überlaufen der Neutralisationsvorrichtung ein Warnsignaleinheit angesteuert, eine Pumpe aktiviert und/oder ein Kondensaterzeuger abgeschaltet werden.

### Zeichnung

Weitere Vorteile ergeben sich aus der folgenden Zeichnungsbeschreibung. In der Zeichnung sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Schnittdarstellung einer ersten Neutralisationsvorrichtung und
- Fig. 2: eine schematische Schnittdarstellung einer alternativen Neutralisationsvorrichtung.

### Beschreibung der Ausführungsbeispiele

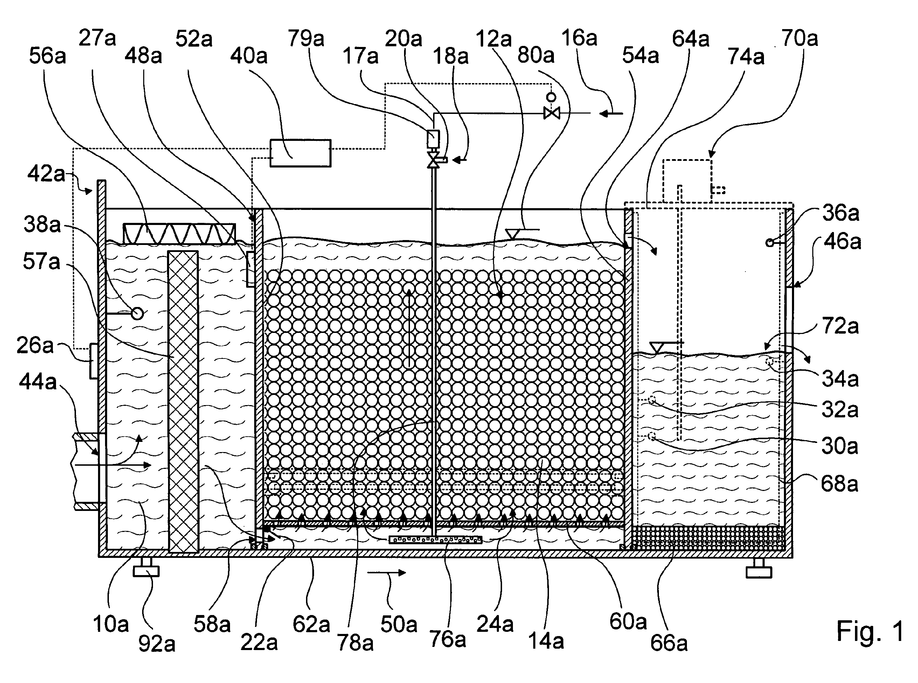

Figur 1 zeigt eine schematisierte Schnittdarstellung einer Neutralisationsvorrichtung zur Neutralisation von Kondensat 10a aus einem Heizgerät, umfassend ein Gehäuse 42a mit einem Kondensateinlass 44a und einem Kondensatauslass 46a. Die Neutralisationsvorrichtung umfasst einen Einsatzkorb 48a, der zum lösbaren Einsatz in das Gehäuse 42a vorgesehen ist. Das Gehäuse 42a weist in seiner Höhe einstellbare Füße 92a auf. Der Einsatzkorb 48a begrenzt einen Aufnahmeraum 12a zur Aufnahme von Neutralisationsmaterial 14a. Der Einsatzkorb 48a ist in einem im Gehäuse 42a eingesetzten Zustand in einer Einbaulage dargestellt und kann von einem Bediener gemeinsam mit dem Neutralisationsmaterial 14a und einer Spüleinrichtung 16a der Neutralisationsvorrichtung aus dem Gehäuse 42a entnommen werden.

Der Einsatzkorb 48a bildet in einer Hauptströmungsrichtung 50a, ausgehend vom Kondensateinlass 44a in Richtung des Kondensatauslasses 46a des Kondensats 10a, eine erste Trennwand 52a und eine zweite Trennwand 54a, die das Gehäuse 42a in verschiedene Neutralisationsabschnitte unterteilt. Das Gehäuse 42a weist keine Trennwände auf bzw. ist trennwandfrei ausgebildet. In einem ersten Neutralisationsabschnitt ist ein Auffangelement 56a für unverbrannte Kohlenwasserstoffe angeordnet, durch welches die Kohlenwasserstoffe aufgenommen und/oder mit Hilfe von Bakterien abgebaut werden. Zudem ist in dem ersten Neutralisationsabschnitt ein Filterelement 57a angeordnet, durch das das Kondensat 10a strömt. Mittels der ersten Trennwand 52a wird das Kondensat 10a von dem ersten Neutralisationsabschnitt in einem Bodenbereich desselben durch einen Kondensateinlass 58a des Einsatzkorbs 48a in einen zweiten Neutralisationsabschnitt geleitet. Der Einsatzkorb 48a weist einen kondensatdurchlässigen, siebartigen Boden 60a auf, durch den das Kondensat 10a in den Aufnahmeraum 12a des Einsatzkorbs 48a geführt wird. Der Boden 60a ist gegenüber Unterkanten der Trennwände 52a, 54a, mittels denen der Einsatzkorb 48a auf einem Boden 62a des Gehäuses 42a aufgeständert ist, in einer Einbaulage betrachtet nach oben versetzt angeordnet, so dass der Boden 60a des Einsatzkorbs 48a einen Abstand zu dem Boden 62a des Gehäuses 42a aufweist und das Kondensat 10a vorteilhaft großflächig durch den Boden 60a des Einsatzkorbs 48a strömen kann.

Das Kondensat 10a wird durch das Neutralisationsmaterial 14 zu einem Kondensatauslass 64a des Einsatzkorbs 48a geführt. Der Kondensateinlass 58a und der Kondensatauslass 64a des Einsatzkorbs 48a sind in unterschiedlichen Höhen angeordnet, um eine vorteilhafte Durchströmung des Aufnahmeraums 12a, und zwar von unten nach oben, zu erreichen. Ferner wird durch einen Niveauunterschied des Kondensateinlasses 58a und des Kondensatauslasses 64a ein Sifon erreicht, wodurch ein unerwünschter Gasaustritt von einem Heizkessel über eine Kondensatleitung vermieden wird.

Das Kondensat 10a strömt über den Kondensatauslass 64a in einen dritten Neutralisationsbereich, der zur Ablagerung von Absetzprodukten 66a vorgesehen ist. Die Absetzprodukte 66a werden insbesondere bei der Neutralisation des Kondensats 10a gebildet. Zur Aufnahme der Absetzprodukte 66a könnte ein weiterer Einsatzkorb 68a vorgesehen sein, mittels dem die Absetzprodukte 66a gemeinsam aus dem Gehäuse 42a entnommen werden könnten, ohne dass ein Bediener mit dem Kondensat 10a oder den Absetzprodukten 66a direkt in Kontakt kommt, wie dies gestrichelt angedeutet ist. Aus dem dritten Neutralisationsbereich fließt das Kondensat 10a über den Kondensatauslass 46a ab. Der Kondensatauslass 46a könnte grundsätzlich in verschiedenen Höhen angeordnet sein, jedoch nicht höher als der Kondensatauslass 64a.

Ferner ist denkbar, eine Pumpe 70a zum Abpumpen des gereinigten Kondensats 10a vorzusehen, wodurch gezielt das Kondensat 10a in bestimmten Bereichen abgenommen werden kann, wie dies gestrichelt dargestellt ist. Hierbei wird vorzugsweise eine Niveauregelungseinheit 72a vorgesehen. Die Pumpe 70a kann vorteilhaft an einem Deckel 74a angeordnet sein.

Die Spüleinrichtung 16a ist vorteilhaft am Einsatzkorb 48a befestigt, könnte jedoch grundsätzlich auch am Gehäuse 42a befestigt sein. Die Spüleinrichtung 16a ist dazu vorgesehen, einen Spülvorgang des in dem Aufnahmeraum 12a befindlichen Neutralisationsmaterials 14a mit einer Spülflüssigkeit 17a und gleichzeitig mit einem Gas 18a durchzuführen. Die Spüleinrichtung 16a ist dazu vorgesehen, das gesamte Neutralisationsmaterial 14a von unten nach oben mit der Spülflüssigkeit 17a und dem Gas 18a zu durchströmen. Hierfür weist die Spüleinrichtung 16a einen durch das Neutralisationsmaterial 14a bzw. durch den Aufnahmeraum 12a hindurchgeführten Kanal 78a auf. Ferner weist die Spüleinrichtung 16a einen unterhalb des Neutralisationsmaterials 14a angeordneten Spülkopf 76a auf. Der Spülkopf 76a ist mit dem Kanal 78a gekoppelt und ist über den Kanal 78a mit Spülflüssigkeit 17a und Gas 18a versorgbar. Am Kanal 78a ist ein Kupplungsstück 79a angeordnet, mit dem der Kanal 78a von einem Bediener lösbar, insbesondere werkzeuglos lösbar, mit einer Flüssigkeitsquelle verbindbar ist. Der Spülkopf 76a ist unterhalb des Bodens 60a des Einsatzkorbs 48a angeordnet. Der Spülkopf 76a ist scheibenförmig ausgebildet, d.h. er weist eine mehrfach größere Erstreckung parallel zum Boden 60a des Einsatzkorbs 48a auf als senkrecht zum Boden 60a. Der Spülkopf 76a weist an seiner Stirnfläche Austrittsöffnungen auf, über die die Spülflüssigkeit 17a und das Gas 18a unterhalb des Bodens 60a während eines Spülvorgangs ausströmen. Die Spülflüssigkeit 17a wird von Wasser gebildet und das Gas 18a wird von Luft gebildet. Grundsätzlich sind jedoch auch andere, dem Fachmann als sinnvoll erscheinende Flüssigkeiten und Gase denkbar. Mit Luft und Wasser kann jedoch einfach eine Umweltverträglichkeit sichergestellt werden.

Die Spüleinrichtung 16a weist eine Ansaugeinheit 20a auf, die dazu vorgesehen ist, mittels der Spülflüssigkeit 17a das Gas 18a nach dem Prinzip einer Wasserstrahlpumpe anzusaugen.

Um einen gewünschten Spülstrom 24a zu erreichen, weist die Spüleinrichtung 16a eine Verschlusseinheit 22a auf. Die Verschlusseinheit 22a wird von einer Rückschlagklappe gebildet. Die Verschlusseinheit 22a ist am Einsatzkorb 48a schwenkbar gelagert. Die Verschlusseinheit 22a verschließt selbsttätig bei einem Spülvorgang den Kondensateinlass 58a.

Ferner weist die Neutralisationsvorrichtung Schwingungserregungseinheiten 26a, 27a auf, die dazu vorgesehen sind, Ablagerungen auf dem Neutralisationsmaterial 14a, am Gehäuse 42a und am Einsatzkorb 48a abzulösen. Die Schwingungserregungseinheit 26a ist am Gehäuse 42a befestigt. Die Schwingungserregungseinheit 27a ist am Einsatzkorb 48a befestigt. Die Schwingungserregungseinheiten 26a, 27a werden von Unwuchteinheiten gebildet, die zur Erzeugung mechanischer Schwingungen während des Spülvorgangs vorgesehen sind, die vom Gehäuse 42a und vom Einsatzkorb 48a auf das Neutralisationsmaterial 14a übertragen werden.

Die Spüleinrichtung 16a weist mehrere Sensormittel 30a, 32a, 34a, 36a, 38a sowie eine Steuer- und Regeleinheit 40a auf, die abhängig von Kenngrößen Vorgänge einleitet. Die Sensormittel 34a, 36a, 38a dienen zur Erfassung von Niveaus und die Sensormittel 30a, 32a dienen zur Erfassung von Kenngrößen für PH-Werte des Kondensats 10a. Mittels des Sensormittels 36a können Kenngrößen erfasst werden, die auf eine Überlaufgefahr hinweisen. Mittels der Sensormittel 34a, 38a können Kenngrößen erfasst werden, die auf eine Austrocknungsgefahr des Neutralisationsmaterials 14a hinweisen.

Die Steuer- und Regeleinheit 40a wertet die von den Sensormitteln 30a-38a erfassten Kenngrößen aus. Droht das Neutralisationsmaterial 14a auszutrocknen, die Neutralisationsvorrichtung überzulaufen und/oder weicht der PH-Wert von einem Sollwertbereich ab, wird von der Steuer- und Regeleinheit 40a ein Spülvorgang eingeleitet und/oder ein Kondensaterzeuger abgeschaltet. Die Sensormittel 30a, 34a könnten auch zur Ansteuerung einer Kondensathebeanlage dienen.

Muss das Neutralisationsmaterial 14a ausgetauscht werden, kann ein Bediener das Neutralisationsmaterial 14a gemeinsam mittels des Einsatzkorbs 48a komfortabel aus dem Gehäuse 42a entnehmen, ohne mit dem Kondensat 10a in Kontakt zu kommen. Der Einsatzkorb 48a ragt hierfür über eine maximale Kondensatfüllstandshöhe 80a bzw. über eine durch den Kondensatauslass 64a bestimmte Kondensatüberlaufhöhe hinaus und bildet oberhalb des Kondensatauslasses 64a eine Haltevorrichtung zum Herausnehmen aus dem Gehäuse 42a.

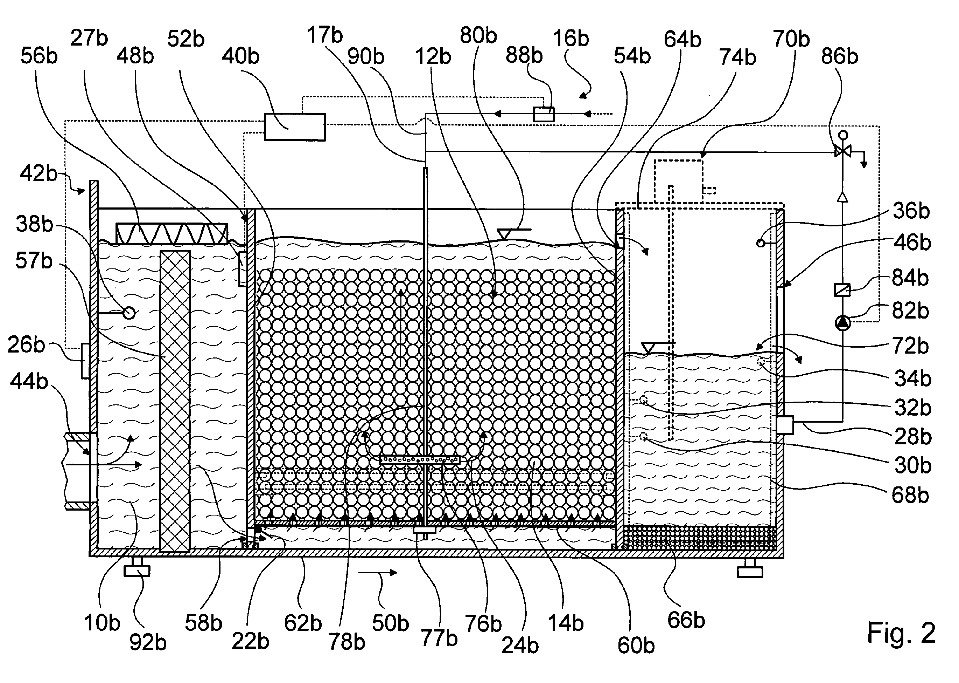

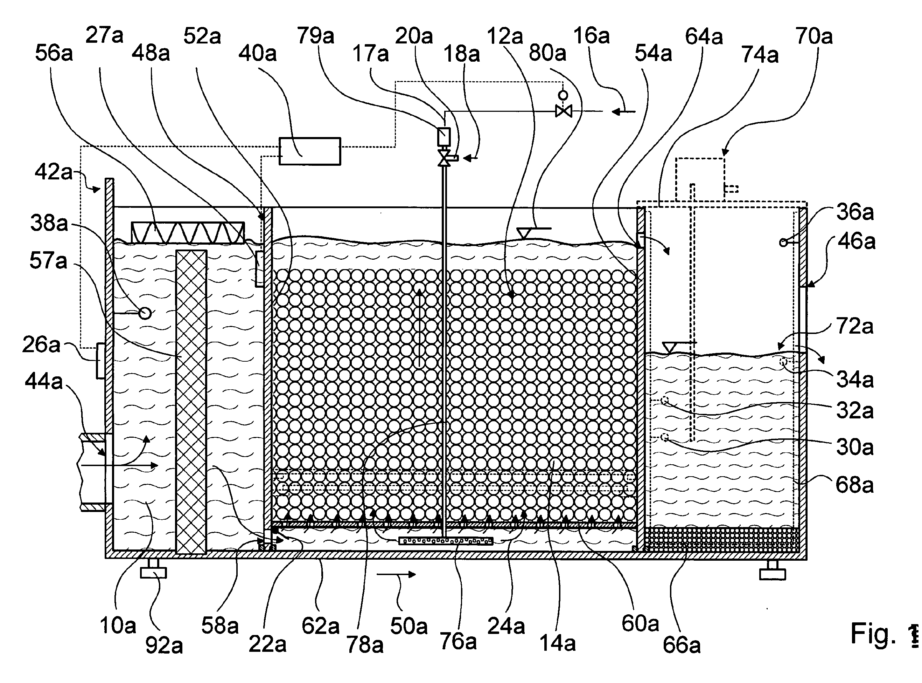

In Figur 2 ist eine alternative Neutralisationsvorrichtung dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele sind jedoch den Bezugszeichen der Ausführungsbeispiele in den Figuren 1 und 2 die Buchstaben a bzw. b hinzugefügt. Die nachfolgende Beschreibung beschränkt sich im Wesentlichen auf die Unterschiede zu dem Ausführungsbeispiel in Figur 1, wobei bezüglich gleich bleibender Bauteile, Merkmale und Funktionen auf die Beschreibung des Ausführungsbeispiels in Figur 1 verwiesen werden kann.

Die Neutralisationsvorrichtung in Figur 2 weist eine Spüleinrichtung 16b auf, die dazu vorgesehen ist, neutralisierte Kondensatflüssigkeit 28b rückzuführen und teilweise für eine Spülflüssigkeit 17b zu nutzen. Die Spüleinrichtung 16b weist eine Pumpe 82b auf, mittels der bei einem Spülvorgang die Kondensatflüssigkeit 28b, nachdem diese einen Einsatzkorb 48b mit Neutralisationsmaterial 14b durchströmt hat, abgepumpt werden kann. Die Pumpe 82b ist mit einer Steuer- und Regeleinheit 40b verbunden. Die Kondensatflüssigkeit 28b wird über eine Rückschlagklappe 84b und über ein Steuerventil 86b in einen Kanal 78b der Spüleinrichtung 16b geführt, der sich teilweise durch einen Aufnahmeraum 12b mit dem Neutralisationsmaterial 14b zu einem Spülkopf 76b erstreckt. Der Spülkopf 76b ist in einem unteren Bereich des Aufnahmeraums 12b in mitten des Neutralisationsmaterials 14b angeordnet. Der Spülkopf 76b und der Kanal 78b sind über eine Halteeinheit 77b am Einsatzkorb 48b befestigt. Zusätzlich weist die Spüleinrichtung 16b einen weiteren Flüssigkeitsanschluss 88b auf. Der Flüssigkeitsanschluss 88b ist mittels eines Kanals 90b mit dem Kanal 78b verbunden. Der Flüssigkeitsanschluss 88b ist ein Frischwasseranschluss, so kann gezielt bei Bedarf zu der Kondensatflüssigkeit 28b Frischwasser zugemischt werden. Die Spülflüssigkeit 17b besteht dann aus Frischwasser und der Kondensatflüssigkeit 28b. Alternativ oder zusätzlich zu Frischwasser könnte der Kondensatflüssigkeit 28b auch eine andere, dem Fachmann als sinnvoll erscheinende Flüssigkeit und/oder auch ein Gas hinzugemischt werden.

### Bezugszeichen

- 10: Kondensat
- 12: Aufnahmeraum
- 14: Neutralisationsmaterial
- 16: Spüleinrichtung
- 17: Spülflüssigkeit
- 18: Gas
- 20: Ansaugeinheit
- 22: Verschlusseinheit
- 24: Spülstrom
- 26: Schwingungserregungseinheit
- 27: Schwingungserregungseinheit
- 28: Kondensatflüssigkeit
- 30: Sensormittel
- 32: Sensormittel
- 34: Sensormittel
- 36: Sensormittel
- 38: Sensormittel
- 40: Steuer- und/oder Regeleinheit
- 42: Gehäuse
- 44: Kondensateinlass
- 46: Kondensatauslass
- 48: Einsatzkorb
- 50: Hauptströmungsrichtung
- 52: Trennwand
- 54: Trennwand
- 56: Auffangelement
- 57: Filterelement
- 58: Kondensateinlass
- 60: Boden
- 62: Boden
- 64: Kondensatauslass
- 66: Absetzprodukt
- 68: Einsatzkorb
- 70: Pumpe
- 72: Niveauregelungseinheit
- 74: Deckel
- 76: Spülkopf
- 77: Halteeinheit
- 78: Kanal
- 79: Kupplungsstück
- 80: Kondensationsfüllstandshöhe
- 82: Pumpe
- 84: Rückschlagklappe
- 86: Steuerventil
- 88: Flüssigkeitsanschluss
- 90: Kanal
- 92: Fuß

## Patentansprüche

1. Neutralisationsvorrichtung, insbesondere zur Neutralisation von Kondensat (10a; 10b) aus einer Verbrennung von flüssigen, gasförmigen und/oder festen Brennstoffen, mit einem Aufnahmeraum (12a; 12b) zur Aufnahme von Neutralisationsmaterial (14a; 14b),
**gekennzeichnet durch**
wenigstens eine Spüleinrichtung (16a; 16b), welche dazu vorgesehen ist, einen Spülvorgang des in dem Aufnahmeraum (12a; 12b) befindlichen Neutralisationsmaterials (14a; 14b) mit wenigstens einer Spülflüssigkeit (17a; 17b) durchzuführen.

2. Neutralisationsvorrichtung nach Anspruch 1,
**dadurch gekennzeichnet,**
**dass** die Spüleinrichtung (16a; 16b) dazu vorgesehen ist, wenigstens einen Teil des Neutralisationsmaterials (14a; 14b) von unten nach oben mit der Spülflüssigkeit (17a; 17b) zu durchspülen.

3. Neutralisationsvorrichtung nach einem der vorhergehenden Ansprüche,
**dadurch gekennzeichnet,**
**dass** die Spüleinrichtung (16a) dazu vorgesehen ist, einen Spülvorgang mit wenigstens einem Gas (18a) durchzuführen.

4. Neutralisationsvorrichtung nach Anspruch 3,
**dadurch gekennzeichnet,**
**dass** die Spüleinrichtung (16a) dazu vorgesehen ist, wenigstens einen Spülvorgang mit der Spülflüssigkeit (17a) und gleichzeitig mit dem Gas (18a) durchzuführen.

5. Neutralisationsvorrichtung zumindest nach Anspruch 3,
**dadurch gekennzeichnet,**
**dass** die Spüleinrichtung (16a) eine Ansaugeinheit (20a) aufweist, die dazu vorgesehen ist, mittels einer Flüssigkeit (17a) das Gas (18a) anzusaugen.

6. Neutralisationsvorrichtung nach einem der vorhergehenden Ansprüche,
**dadurch gekennzeichnet,**
**dass** die Spüleinrichtung (16a; 16b)) wenigstens eine Verschlusseinheit (22a; 22b) zur Erzielung eines gewünschten Spülstroms (24a; 24b) aufweist.

7. Neutralisationsvorrichtung nach dem Oberbegriff des Anspruchs 1 und insbesondere nach einem der vorhergehenden Ansprüche,
**gekennzeichnet durch**
wenigstens eine Schwingungserregungseinheit (26a, 27a; 26b, 27b), die dazu vorgesehen ist, Ablagerungen abzulösen.

8. Neutralisationsvorrichtung nach einem der vorhergehenden Ansprüche,
**dadurch gekennzeichnet,**
**dass** die Spüleinrichtung (16b) dazu vorgesehen ist, neutralisierte Kondensatflüssigkeit (28b) rückzuführen und zumindest teilweise für eine Spülflüssigkeit (17b) zu nutzen.

9. Neutralisationsvorrichtung nach einem der vorhergehenden Ansprüche,
**dadurch gekennzeichnet,**
**dass** die Spüleinrichtung (16a; 16b) wenigstens ein Sensormittel (30a-38a; 30b-38b) aufweist.

10. Neutralisationsvorrichtung nach einem der vorhergehenden Ansprüche,
**dadurch gekennzeichnet,**
**dass** die Spüleinrichtung (16a; 16b) eine Steuer- und/oder Regeleinheit (40a; 40b) aufweist, die abhängig von wenigstens einer Kenngröße wenigstens einen Vorgang einleitet.

11. Reinigungsverfahren zur Reinigung von Neutralisationsmaterial (14a; 14b), in einer Neutralisationsvorrichtung, insbesondere in einer Neutralisationsvorrichtung nach einem der vorhergehenden Ansprüche,
**dadurch gekennzeichnet,**
**dass** bei einem Spülvorgang in einem Aufnahmeraum (12a; 12b) befindliches Neutralisationsmaterial (14a; 14b) mit wenigstens einer Spülflüssigkeit (17a; 17b) gespült wird.
